# EUROPÄISCHE PATENTSCHRIFT

(11) **EP 2 080 180 B1**
(45) Veröffentlichungstag und Bekanntmachung des Hinweises auf die Patenterteilung: **19.05.2010**
(21) Anmeldenummer: 07802116.9
(22) Anmeldetag: 04.09.2007
(51) Int. Cl.: G08G 1/16, B60R 25/00, H04B 5/00

(54) **ANNÄHERUNGSNACHWEISSYSTEM ZUM NACHWEIS EINER ANNÄHERUNG EINER PERSON AN EIN OBJEKT, INSBESONDERE AN EINE MASCHINE**
APPROACH DETECTION SYSTEM FOR DETECTING WHEN A PERSON APPROACHES AN OBJECT, PARTICULARLY A MACHINE
SYSTÈME DE VERIFICATION D'APPROCHE PERMETTANT DE DÉTECTER UNE PERSONNE EN APPROCHE D'UN OBJET, EN PARTICULIER D'UNE MACHINE

(43) Veröffentlichungstag der Anmeldung: 22.07.2009
(73) Patentinhaber: Bartec GmbH, 97980 Bad Mergentheim (DE)
(72) Erfinder: BÖHM, Alfred, 94234 Viechtach (DE); BINDER, Wilhelm, 94113 Tiefenbach (DE); KELLER, Valeri, 94469 Deggendorf (DE)
(74) Vertreter: Heim, Hans-Karl
(86) Internationale Anmeldenummer: PCT/EP2007/007704
(87) Internationale Veröffentlichungsnummer: WO 2009/030255

(56) Entgegenhaltungen:
- WO-A-2005/088859
- DE-A1-102005 060 778

## Beschreibung

Die Erfindung betrifft ein Annäherungsnachweissystem zum Nachweis einer Annäherung einer Person an ein Objekt, insbesondere an eine Maschine, beispielsweise eine landwirtschaftliche Maschine, wobei das Objekt zumindest bereichsweise eine metallische Außenstruktur aufweist.

In landwirtschaftlichen Betrieben verunglückt jährlich eine Vielzahl von Personen, wobei die Unfälle nicht selten tödlich enden. Gefährdet sind insbesondere Kinder, bei denen Unfälle häufig darauf zurückzuführen sind, dass sie von einem Traktor oder einer anderen Landarbeitsmaschine überrollt werden.

Ein Grund der Unfälle kann darin liegen, dass Kinder, die sich beim Anfahren beziehungsweise beim Rangieren von landwirtschaftlichen Maschinen im Gefahrenbereich der Maschine befinden, übersehen werden. Dies kann wiederum darauf zurückzuführen sein, dass sie sich dem Blickfeld des Fahrers entziehen oder dass der Fahrer seine Aufmerksamkeit anderen Vorgängen widmen muss. Aber auch bei anderen Maschinen und/oder Fahrzeugen, wie beispielsweise Gabelstaplern, PKW, LKW oder bei sonstigen beweglichen Maschinen und/oder Robotern besteht ein Unfallrisiko, wenn eine Person in den Gefahrenbereich gelangt.

Es ist bekannt, zur Überwachung eines Gefahrenbereichs ein Radarsystem zu verwenden, bei dem elektromagnetische Strahlung ausgesandt wird und das Signal, das von einem im Gefahrenbereich befindlichen Objekt reflektiert wird, erkannt wird. Eine simultane Überwachung eines großen Gefahrenbereiches kann mit einem solchen System aber vergleichsweise aufwändig sein.

Ferner sind kapazitive Näherungssensoren bekannt, bei denen eine Änderung einer Kapazität bei Annäherung eines Objektes gemessen wird. Hier kann die Absicherung eines großen Gefahrenbereiches viele Näherungssensoren notwendig machen und somit aufwändig sein.

In der nachveröffentlichten deutschen Patentanmeldung mit dem Aktenzeichen 10 2006 042 547.2 ist ein System zum Überwachen eines Gefahrenbereichs einer Maschine beschrieben. Dieses System weist eine an der Maschine angeordnete Basiseinheit auf, mit der im Bereich der Maschine ein Nahfeld erzeugt wird. Eine gefährdete Person trägt eine Transpondereinheit, die bei Empfang des Nahfeldes ein Warnsignal zur Maschine zurücksendet. Diese nachveröffentlichte deutsche Patentanmeldung lässt es jedoch offen, auf welche Art und Weise das Nahfeld erzeugt wird.

Die WO 00/15931 offenbart ein elektronisches Kommunikationssystem für ein Fahrzeug mit einer im Fahrzeug angeordneten Basisstation und einem beweglichen Datenträger, wobei die Basisstation und der Datenträger jeweils Elektroden aufweisen, die Koppelstrecken zur Übertragung von Datensignalen bilden. Dabei kann vorgesehen sein, dass eine Koppelstrecke wenigstens teilweise durch den Verschiebungsströme führenden Körper eines Benutzers gebildet ist. Das aus der WO 00/15931 bekannte System kann beispielsweise für die Ausübung der Zutrittskontrolle zum Fahrzeug, das heißt zur automatischen Verriegelung beziehungsweise Entriegelung der Fahrzeugtüren dienen. In diesem Fall kann im Bereich des Türgriffes eine Elektrode vorgesehen sein, wobei ein Datenaustausch zwischen dem an der Person angeordneten Datenträger und der am Fahrzeug angeordneten Basisstation zur automatischen Entriegelung der Tür in dem Fall erfolgt, wenn die Person ihre Hand an den Türgriff hält. Ein Annäherungswarnsystem ist in der WO 00/15931 nicht vorgesehen.

Ein weiteres Zugangsberechtigungssystem ist aus der nächstkommenden WO 2005/088859 bekannt. Dieses bekannte System kann auch zur Erzeugung eines Verlustalarmes bei Verlust eines Objektes oder einer Person dienen. Ein Annäherungswarnsystem ist hingegen nicht beschrieben. Die WO 2005/088859 beschreibt ein Nachrichtenübertragungssystem mit einem Sender, der kapazitiv an eine Umgebung angekoppelt ist, und einem ebenfalls kapazitiv an die Umgebung angekoppelten Empfänger. Dabei sind der Sender und der Empfänger über zumindest ein durch mindestens ein hochfrequentes elektrisches Signal erzeugtes elektrisches Feld miteinander gekoppelt, wobei der Sender oder der Empfänger kapazitiv mit dem Körper eines Benutzers gekoppelt ist.

Die WO 96/36134 offenbart ein System für den kontaktlosen Nachweis und die Signalübertragung unter Verwendung des menschlichen Körpers als Signaltransmissionsmedium. Das System kann auch als Positionssensor verwendet werden, wobei in diesem Fall eine Vielzahl von Empfängern matrixartig angeordnet wird. Aufgrund der Vielzahl der benötigten Empfänger ist dieses System ebenfalls vergleichsweise aufwändig.

Die EP 0 843 425 A2 offenbart eine elektronische Kommunikationsvorrichtung, welche den menschlichen Körper als Transmissionsmedium einsetzt. Ein Annäherungswarnsystem ist hierin ebenfalls nicht beschrieben. Ein Informationsübertragungssystem unter Verwendung eines elektrischen Nahfeldes ist aus der WO 2004/036784 A1 bekannt.

Die DE 10 2005 060 778 A1 bezieht sich auf eine Schaltungseinrichtung und ein Verfahren zur Erfassung der Präsenz eines Objektes im Umgebungsbereich eines Kraftfahrzeuges. Dabei ist ein Kraftfahrzeug mit einer Detektionsschaltung vorgesehen, die ein erstes Elektrodensystem, ein zweites Elektrodensystem und einen Wechselspannungsgenerator zum Aufbau einer Potentialdifferenz zwischen den beiden Elektrodensystemen umfasst, wobei das erste Elektrodensystem im unteren Bereich des Fahrzeuges angeordnet ist, zur Einkoppelung von Verschiebestromereignissen in den das Fahrzeug tragenden Untergrundbereich, und die Detektionsschaltung einen Auswertungsabschnitt umfasst, über welchen eine Rückkoppelung der Verschiebestromereignisse in das zweite Elektrodensystem über das zu detektierende Objekt erfasst wird.

**Aufgabe** der Erfindung ist es, ein Annäherungswarnsystem anzugeben, das konstruktiv einfach aufgebaut und zugleich besonders zuverlässig ist.

Die Aufgabe wird erfindungsgemäß durch ein Annäherungsnachweissystem mit den Merkmalen des Anspruchs 1 gelöst. Bevorzugte Ausführungsbeispiele sind in den abhängigen Ansprüchen angegeben.

Die Erfindung bildet ein gattungsgemäßes Annäherungsnachweissystem dadurch weiter, dass es als Annäherungswarnsystem ausgebildet ist und eine Warneinrichtung aufweist, die bei Eintritt der Person mit der zweiten Nahfeldeinrichtung in einen Nachweisbereich, in dem eine Übertragung des Nahfeldes über die Übertragungsstrecke stattfindet und der die gesamte metallische Außenstruktur des Objektes zumindest annähernd einhüllt, ein Annäherungswarnsignal ausgibt, und dass die erste Nahfeldeinrichtung für eine Kopplung mit dem Nahfeld zum einen mit zumindest einer Streufeldelektrode und zum anderen mit der metallischen Außenstruktur des Objektes verbunden ist, so dass die Außenstruktur eine Gegenelektrode zur Streufeldelektrode bildet.

Nach der Erfindung ist ein Annäherungswarnsystem zum Nachweis einer Annäherung einer Person an ein Objekt, welches zumindest bereichsweise eine metallische Außenstruktur aufweist, vorgesehen. Das erfindungsgemäße Annäherungswarnsystem ist ausgebildet mit zumindest einer ersten Nahfeldeinrichtung, die dem Objekt zugeordnet ist, und einer zweiten Nahfeldeinrichtung, die der Person zugeordnet ist, wobei die erste und die zweite Nahfeldeinrichtung eine Übertragungsstrecke für ein elektrisches Nahfeld bilden, und einer Warneinrichtung, die bei Eintritt der Person mit der zweiten Nahfeldeinrichtung in einen Nachweisbereich, in dem eine Übertragung des Nahfeldes über die Übertragungsstrecke stattfindet, ein Annäherungswarnsignal ausgibt, wobei die erste Nahfeldeinrichtung für eine Kopplung mit dem Nahfeld zum einen mit zumindest einer Streufeldelektrode und zum anderen mit der metallischen Außenstruktur des Objektes verbunden ist, so dass die Außenstruktur eine Gegenelektrode zur Streufeldelektrode bildet, und wobei die Nahfeldeinrichtungen und deren Elektroden so konfiguriert sind, dass der Nachweisbereich die gesamte metallische Außenstruktur des Objektes zumindest annähernd einhüllt und/oder umgibt.

Ein erster Grundgedanke der Erfindung kann darin gesehen werden, ein Annäherungswarnsystem auf der Basis eines elektrischen Nahfeldes zu realisieren. Zu diesem Zwecke werden zwei Nahfeldeinrichtungen verwendet, von denen eine zum Erzeugen und die andere zum Detektieren des Nahfeldes dient, und von denen eine an der Maschine und die andere an der Person angeordnet wird. Erfindungsgemäß handelt es sich somit bei einer der beiden Nahfeldeinrichtungen um einen Nahfelderzeuger und bei der anderen Nahfeldeinrichtung um einen Nahfelddetektor. Nähert sich die Person an die Maschine an, so wird das Nahfeld zwischen Erzeuger und Detektor übertragen. Eine erfolgreiche Übertragung und insbesondere das Erreichen einer vorbestimmten Nahfeld-Signalstärke wird als Eintritt in den Gefahrenbereich gewertet und demgemäß wird, insbesondere am Objekt, ein Warnsignal ausgegeben.

Ein weiterer Aspekt der Erfindung liegt darin, die Nahfeldeinrichtungen, insbesondere die dem Objekt zugeordnete erste Nahfeldeinrichtung, und/oder deren Elektroden so zu konfigurieren, dass der Nachweisbereich die gesamte metallische Außenstruktur des Objektes einhüllt. Im Gegensatz zu einem bekannten Zutrittskontrollsystem wird nach der Erfindung ein Nachweisbereich also nicht nur im Bereich der Türgriffe sondern im Bereich der gesamten metallischen Außenstruktur, das heißt beispielsweise der gesamten Karosserie, positioniert. Dies erlaubt es, mit einer besonders geringen Zahl von Nahfeldeinrichtungen den gesamten Nachweisbereich, d.h. insbesondere Gefahrenbereich, zu überwachen.

Ein weiterer Aspekt der Erfindung liegt darin, zur Kopplung der am Objekt angeordneten ersten Nahfeldeinrichtung an das elektrische Nahfeld zum einen eine Streufeldelektrode und zum anderen die metallische Außenstruktur des Objektes zu verwenden, welche eine Gegenelektrode zur Streufeldelektrode bildet. Demgemäß ist die erste Nahfeldeinrichtung mit der Streufeldelektrode und der metallischen Außenstruktur leitungsverbunden.

Besonders geeignet ist das erfindungsgemäße Annäherungswarnsystem für landwirtschaftliche Maschinen, wobei es insbesondere dazu dienen kann, Kinder, die sich im Gefahrenumfeld der Maschine befinden, zu detektieren und gegebenenfalls einen entsprechenden Alarm auszulösen und/oder automatisch Gegenmaßnahmen zur Abwendung der Gefahr zu ergreifen. Die Vorrichtung ist auch geeignet für PKW, LKW, mit oder ohne Anhänger, Baumaschinen, wie Kräne, Gabelstapler usw. Es kann überdies an Maschinen, insbesondere an stationären Maschinen mit beweglichen Elementen, installiert werden. Mit dem System kann beispielsweise auch ein eingezäunter Bereich überwacht werden.

Nach der Erfindung wird vorteilhafterweise ein quasistationäres elektrisches Nahfeld verwendet. Im Gegensatz zu einem Fernfeld, das mit 1/r abklingt, klingt ein solches Nahfeld geeigneterweise mit 1/r² oder höheren Potenzen ab, so dass die Nahfeldreichweite in der Regel geringer ist als die Fernfeldreichweite. Ein erfindungsgemäßes elektrisches Nahfeld hat den Vorteil, dass Energieverluste verglichen mit einem Fernfeld gering sind, da sich ein Nahfeld nicht ablöst. Hierdurch kann ein besonders effizientes System erhalten werden. Bei dem Nahfeld handelt es sich insbesondere um ein E-Feld, das kapazitiv ein- und ausgekoppelt wird. Zur Nahfelderzeugung und/oder Detektion sind die Nahfeldeinrichtungen vorzugsweise antennenlos ausgebildet.

Zur quasistatischen Nahfelderzeugung können die Koppelelemente der Nahfeldeinrichtungen, insbesondere die Koppelelektroden, geeigneterweise Abmessungen aufweisen, die um vorzugsweise zumindest eine Größenordnung kleiner sind als die Wellenlänge des Nahfeldes, Insbesondere können an den Koppelelementen Leiterlängen < λ/10 oder < λ/(2π) vorgesehen sein. In einer bevorzugten Ausführungsform der Erfindung wird die gesamte metallisch leitende Konstruktion mit einem quasistatischen elektrischen Feld beaufschlagt, das sich wie eine "Aura" um diese Metallkonstruktion legt. Gelangt eine Person mit einem entsprechenden Nahfelddetektor in den Bereich dieser "Aura", so wird die "Aura" vom Detektor nachgewiesen und ein entsprechendes Warnsignal ausgegeben.

Es hat sich gezeigt, dass der Ort der Nahfelderzeugung und der Ort der Nahfelddetektion häufig ohne nennenswerte Auswirkungen, insbesondere auf den Nachweisbereich, vertauscht werden können. Insbesondere kann somit vorgesehen sein, dass die dem Objekt zugeordnete Nahfeldeinrichtung ein Nahfelddetektor und die der Person zugeordnete Nahfeldeinrichtung ein Nahfelderzeuger ist. Besonders bevorzugt ist es jedoch, dass die dem Objekt zugeordnete erste Nahfeldeinrichtung der Nahfelderzeuger zum Erzeugen des Nahfeldes, und dass die der Person zugeordnete zweite Nahfeldeinrichtung der Nahfelddetektor zum Empfang des Nahfeldes ist. Bei einer solchen bevorzugten Anordnung sind die an der Person auftretenden Signalfeldstärken reduziert und zum Betrieb des in der Regel vergleichsweise leistungsaufwändigen Felderzeugers kann eine Bordenergiequelle des Objektes, beispielsweise ein Fahrzeugbatterie, verwendet werden.

Sofern in bevorzugter Weise der Nahfelderzeuger dem Objekt zugeordnet ist, ist dieser mit seinen Elektroden geeigneterweise so konfiguriert, dass das erzeugte Nahfeld die metallische Außenstruktur des Objektes zumindest annähernd einhüllt. In diesem Fall genügt eine einzige Sendeeinrichtung zum Schutz des gesamten Objektes.

Besonders geeignet ist das Annäherungswarnsystem zur Überwachung des Gefährdungsbereiches von Fahrzeugen. Demgemäß ist es vorteilhaft, dass das Objekt ein Fahrzeug, insbesondere ein Landfahrzeug, beispielsweise ein Traktor, ein Gabelstapler, ein PKW oder ein LKW ist. Insbesondere kann es sich bei dem Fahrzeug um ein landwirtschaftliches Nutzfahrzeug handeln. Bei der metallischen Außenstruktur handelt es sich geeigneterweise um eine Karosserie und/oder ein Chassis des Fahrzeuges. Die Nahfeldeinrichtungen und deren Elektroden sind somit vorzugsweise so konfiguriert, dass der Nachweisbereich und insbesondere das Nahfeld die gesamte Karosserie des Objektes, vorzugsweise mit Chassis, umgibt und zumindest annähernd einhüllt.

Zur Erzeugung einer Feldverteilung, die im Hinblick auf den gewünschten Nachweisbereich geeignet ist, ist die Streufeldelektrode zweckmäßigerweise außerhalb der metallischen Außenstruktur vorgesehen. Vorzugsweise ist die Streufeldelektrode oberhalb des Daches der Karosserie angeordnet. Hierdurch kann eine besonders gleichförmige Feldverteilung im Gefahrenbereich erhalten werden.

Eine weitere bevorzugte Ausführungsform der Erfindung besteht darin, dass die Streufeldelektrode in einer Stoßstange, insbesondere in einer Kunststoffstoßstange, der Karosserie angeordnet ist. Dies ermöglicht es, die Streufeldelektrode in besonders einfacher Weise und ohne Änderung des Luftwiderstandes des Fahrzeuges in einem geschützten Bereich anzuordnen.

Insbesondere zur Homogenisierung des Feldverlaufes kann die erste Nahfeldeinrichtung auch mit mehreren Streufeldelektroden verbunden sein, von denen beispielsweise eine in einer vorderen Stoßstange und die andere in einer hinteren Stoßstange der Karosserie angeordnet sein kann. Grundsätzlich ist es nach der Erfindung auch möglich, mehrere erste Nahfeldeinrichtungen zu verwenden, deren Streufeldelektroden an unterschiedlichen Orten bezüglich der metallischen Außenstruktur vorgesehen sein können. Dies ermöglicht eine Unterscheidung der Richtung der gefährdeten Person. Sofern mehrere erste Nahfeldeinrichtungen vorgesehen sind, bleibt ein wesentlicher Aspekt der Erfindung, dass der durch sie gebildete Nachweisbereich die gesamte metallische Außenstruktur des Objektes zumindest annähernd einhüllt, wobei sie insbesondere zusammen ein Nahfeld erzeugen, das die gesamte metallische Außenstruktur des Objektes zumindest annähernd einhüllt.

Die Streufeldelektrode kann grundsätzlich verschiedenartig gestaltet werden. Als besonders effizient haben sich jedoch Kugelelektroden erwiesen. Alternativ kann vorgesehen sein, dass die Streufeldelektrode länglich ausgebildet ist und senkrecht zu benachbarten Abschnitten der metallischen Außenstruktur verläuft. Auch senkrecht zueinander angeordnete Elektroden erzeugen ein gutes Streufeld.

Im Hinblick auf die Betriebssicherheit ist es weiterhin besonders vorteilhaft, dass die metallische Außenstruktur geerdet werden kann. Versuche haben überraschenderweise gezeigt, dass das auf Nahfeldern basierende Annäherungswarnsystem auch bei einer Erdung funktionsfähig ist, was wohl auf die Impedanz des Bodens zurückzuführen ist. Insbesondere kann sich ein Nahfeld auch bei einer Erdung des Fahrzeuges unterhalb des Fahrzeuges ausbilden.

Bei komplexeren Objekten kann die metallische Außenstruktur auch mehrteilig ausgebildet sein. Beispielsweise kann sie durch Chassis und/oder Karosserie einer Zugmaschine einerseits und eines hieran angehängten Anhängers oder Werkzeuges, zum Beispiel eines Ladewagens, Pfluges oder Güllefasses, andererseits bestehen. Sofern die Außenstruktur mehrteilig ausgebildet ist, ist zwischen den einzelnen Teilen geeigneterweise eine elektrische, beispielsweise metallische Kopplung, insbesondere durch eine lösbare elektrische Verbindung, beispielsweise Steckverbindung, gegeben. Über eine solche elektrische Verbindung kann sich das Nahfeld und/oder der Nachweisbereich auf alle Teile der Außenstruktur erstrecken, ohne dass zusätzliche aktive Einrichtungen erforderlich sind. Beispielsweise kann sich über die elektrische Verbindung das den Traktor einhüllende Nahfeld auf einen Anhänger erstrecken. Die lösbare elektrische Verbindung kann gleichzeitig eine mechanische Verbindung zwischen den Teilen bilden und beispielsweise durch die Anhängerkupplung des Traktors gebildet sein. Zusätzlich oder alternativ kann auch eine elektrische Steckverbindung vorgesehen sein.

Weiterhin ist es besonders vorteilhaft, dass das elektrische Nahfeld ein Wechselfeld ist. Ein solches Wechselfeld gestattet es den Nahfeldeinrichtungen, in besonders einfacher Weise das vom Nahfelderzeuger erzeugte Feld von anderen Feldern zu unterscheiden.

Eine Schwingungsfrequenz des Wechselfeldes liegt bevorzugt im Bereich von 10 kHz bis 10 MHz, insbesondere von 1 MHz bis 5 MHz, wobei 5 MHz bevorzugt sind. Versuche haben gezeigt, dass bei derartigen Feldfrequenzen ein besonders zuverlässiger Betrieb des Annäherungswarnsystems möglich ist. Zudem können bei den genannten Frequenzen die Detektoren in besonders einfacher Weise konstruiert werden.

Ein besonders einfaches und zuverlässiges Annäherungswarnsystem kann nach der Erfindung dadurch erhalten werden, dass das Wechselfeld ein kontinuierliches (CW) Wechselfeld ist. Hierunter kann insbesondere verstanden werden, dass die Amplitude und die Frequenz des Feldes nach dem Einschalten und gegebenenfalls einem anfänglichen Einjustieren nicht mehr geändert werden. Insbesondere kann das Wechselfeld somit unmoduliert sein und/oder keinen nachrichtentechnischen Informationsgehalt tragen. Ein kontinuierliches Wechselfeld erlaubt eine besonders hohe Betriebssicherheit. Nach der Erfindung kann es also besonders vorteilhaft sein, dass über das Nahfeld keine Daten übertragen werden, das Nahfeld also im Anschluss an den Einschaltvorgang datenfrei ist, und das Nahfeld lediglich zum Nachweis einer Annäherung und/oder zur Entfernungsbestimmung dient. Demgemäß dient das Nahfeld nach der Erfindung insbesondere nicht zur Informationsübertragung sondern lediglich zum Feststellen der Entfernung zwischen den beiden Nahfeldeinrichtungen auf Grundlage der Feldstärke des Nahfeldes. Alternativ kann aber auch vorgesehen sein, dem Nahfeld Informationen aufzuprägen, so dass der Detektor beispielsweise verschiedene Felderzeuger unterscheiden kann.

Die Zuverlässigkeit des Systems kann dadurch erhöht werden, dass der Nahfelddetektor Mittel zur Unterscheidung des vom Nahfelderzeuger erzeugten Nahfeldes von anderen Feldern aufweist. Hierdurch können Fehlalarme durch eventuell zusätzlich vorhandene Felder vermieden werden. Die Mittel zur Unterscheidung können beispielsweise einen Frequenzfilter aufweisen, der auf die Feldfrequenz des Wechselfeldes abgestimmt ist. Insbesondere kann ein Bandpassfilter vorgesehen sein, der beispielsweise als elektrischer Bandpassfilter ausgebildet sein kann und gegebenenfalls auch einen Mischer zum Erzeugen einer Zwischenfrequenz aufweisen kann.

Weiterhin ist es bevorzugt, dass eine Entscheidungsschaltung vorgesehen ist, die auf Grundlage einer Signalstärke des am Nahfelddetektor vorliegenden Nahfeldes über eine Annäherung der Person an das Objekt entscheidet. Diese Entscheidungsschaltung ist vorzugsweise den Mitteln zur Unterscheidung nachgeschaltet und/oder kann Teil der Warneinrichtung sein. Sie entscheidet anhand der Stärke des empfangenen Nahfeldsignals darüber, ob eine Annäherung und somit eine potenzielle Gefährdungssituation vorliegt.

Die Entscheidungsschaltung kann beispielsweise einen Schwellwertschalter aufweisen, der insbesondere bei Überschreiten eines Schwellwertes Alarm auslösen kann. Alternativ oder zusätzlich kann die Entscheidungsschaltung kontinuierlich arbeitend ausgebildet sein und dafür ausgebildet sein, aus der Signalstärke eine Abstandsinformation zu ermitteln. Insbesondere zu diesem Zweck kann die Entscheidungsschaltung einen Analog-/Digital-Wandler aufweisen. Die Entscheidungsschaltung ist vorzugsweise zumindest teilweise am Nahfelddetektor angeordnet. Zusätzlich oder alternativ kann sie jedoch auch dem Nahfelderzeuger zugeordnet sein.

Eine weitere vorteilhafte Ausführungsform der Erfindung besteht darin, dass der Nahfelddetektor einen Funksender aufweist, und dass der Funksender dafür eingerichtet ist, die Beschaffenheit eines von ihm erzeugten Funksignals abhängig von einer Signalstärke des am Nahfelddetektor vorliegenden Nahfeldes zu ändern. Diese Ausführungsform ermöglicht es, Informationen über eine Annäherung, die von dem von der Person getragenen Nahfelddetektor registriert werden, mittels des Funksignales zum Objekt zu übertragen, wo dann beispielsweise ein Warnsignal ausgegeben werden kann. Geeigneterweise steht der Funksender mit der Entscheidungsschaltung in Verbindung und ändert das Funksignal in Abhängigkeit der von ihr nachgewiesenen Signalstärke, die ein Maß für die Annäherung darstellt.

Beispielsweise kann die Beschaffenheitsänderung des Funksignals eine Modulation des Funksignals mit einer Information über die Annäherung beinhalten. Dabei kann vorgesehen sein, das Funksignal bei Überschreiten einer Schwelle der Nahfeld-Signalstärke zu ändern. Zusätzlich oder alternativ können dem Funksignal Informationen über die Signalstärke, die mit der Distanz korreliert ist, aufmoduliert werden.

Weiterhin ist es zweckmäßig, dass die Warneinrichtung zumindest in Teilen am Objekt angeordnet ist und einen Funkempfänger zum Nachweis und/oder zur Auswertung des Funksignals vom Funksender aufweist. Gemäß dieser Ausführungsform wird Information über die Annäherung von dem an der Person angeordneten Nahfelddetektor zum Objekt über eine Funkstrecke übertragen, so dass am Objekt vor einer Annäherung gewarnt werden kann.

Überdies ist es vorteilhaft, dass dem Objekt ein zweiter Funksender und der Person ein zweiter Funkempfänger zugeordnet ist, wobei der zweite Funkempfänger vorzugsweise Mittel zum Aktivieren des Nahfelddetektors bei Empfang eines Funksignals vom zweiten Funksender aufweist. Es kann somit eine Ausführungsform vorgesehen sein, bei welcher der der Person zugeordnete Nahfelddetektor "schlafend" ausgebildet ist und erst bei Annäherung an das Objekt durch das Funksignal des zweiten Funksenders aktiviert wird. Hierdurch kann der Energieverbrauch am Nahfelddetektor reduziert werden. Insbesondere kann auch der Funksender des Nahfelddetektors erst beim Empfang eines Funksignales vom zweiten Funksender aktiviert werden. Um den Energieverbrauch weiter zu verringern, ist es vorteilhaft, dass der zweite Funksender periodisch ein Signal aussendet.

Der erste Funksender und der erste Funkempfänger arbeiten vorzugsweise auf einer ersten Frequenz und der zweite Funksender und der zweite Funkempfänger auf einer zweiten Frequenz, wobei die beiden Frequenzen zweckmäßigerweise verschieden sind. Beispielsweise kann die erste Frequenz etwa 433 MHz und die zweite Frequenz etwa 868 MHz betragen. Auch kann die erste Frequenz etwa 868 MHz und die zweite Frequenz etwa 433 MHz betragen. Der der Person zugeordnete erste Funksender und der der Person zugeordnete zweite Funkempfänger können als Transceiver (Sendeempfänger) ausgebildet sein. Ebenso können der dem Objekt zugeordnete erste Funkempfänger und der dem Objekt zugeordnete zweite Funksender einen Transceiver bilden. Die Funksender und -empfänger können zum Austauschen von Informationen zwischen Objekt und Person ausgebildet sein. Insbesondere kann vorgesehen sein, mittels des zweiten Funksenders Informationen zur Identität des Objektes und/oder mittels des ersten Senders Informationen zur Identität der Person zu übermitteln. Gemäß der genannten Ausführungsform kann eine Datenübertragung zwischen Objekt und Person insbesondere über eine Funkstrecke erfolgen, wobei das Nahfeld daten- und/oder informationsfrei ausgebildet sein kann. Der oder die Funksender und -empfänger sind geeigneterweise zum Senden beziehungsweise Empfangen eines Fernfeldes ausgelegt.

Die Mittel zum Aktivieren des Nahfelddetektors schalten sich vorzugsweise periodisch an und untersuchen dann, ob ein Funksignal vorhanden ist. Insbesondere kann vorgesehen sein, dass mittels des ersten Funksenders ein Signal zurück an das Objekt gesandt wird, sobald der zweite Funkempfänger ein Funksignal empfängt. Auf Grundlage dieses Signals des ersten Senders kann eine erste (Vor-)Warnstufe ausgelöst werden, auch wenn noch kein Nahfeld übertragen wird. Sobald das Nahfeld mit hinreichender Stärke nachgewiesen wird, kann das Signal des ersten Senders geändert werden und daraufhin eine zweite Warnstufe ausgelöst werden. Die Mittel zum Aktivieren können sich beispielsweise mit einer Periodizität von Millisekunden bis Sekunden einschalten.

Zweckmäßigerweise weist der Nahfelderzeuger einen elektrischen Schwingungserzeuger zum Erzeugen des Wechselfeldes auf. Die Frequenz dieses Generators kann sich im Bereich von wenigen kHz bis in den Bereich von einigen MHz bewegen und liegt vorzugsweise zwischen 10 kHz und 10 MHz. Besonders bevorzugt ist ein Bereich zwischen 1 und 10 MHz, wobei sich 5 MHz in Versuchen als besonders zweckmäßig dargestellt haben. Der Nahfelderzeuger ist geeigneterweise für den Dauerstrichbetrieb ausgebildet, das heißt er arbeitet nach dem Einschalten und gegebenenfalls einer anfänglichen Justage mit konstanter Frequenz und/oder Amplitude und/oder überträgt keine Informationen.

Zu beachten ist, dass sich die Kapazität zwischen Elektrode und Gegenelektrode des Nahfelderzeugers ändern kann, wenn Gegenstände oder Personen in den Bereich der Elektroden gelangen und/oder die Abmessungen der Elektroden geändert werden, beispielsweise bei Anhängen eines Anhängers an den Traktor. Auch können Kapazitätsänderungen bei Änderung der Umgebungsbedingungen wie Luftfeuchte und/oder Bodenfeuchte auftreten. Um eine sichere Trennung des Wechselfeldes des Nahfelderzeugers von anderen Feldern zu gewährleisten, ist es vorteilhaft, dass die Schwingungsfrequenz des Wechselfeldes auch bei solch veränderlichen Kapazitäten konstant gehalten wird. Insbesondere ist es vorteilhaft, dass der Schwingungserzeuger Mittel zum Konstanthalten seiner Schwingungsfrequenz aufweist. Vorzugsweise können diese Mittel zum Konstanthalten der Schwingungsfrequenz bei veränderlicher Elektrodenkapazität ausgebildet sein. Durch die feste Frequenz unabhängig von den kapazitiven Gegebenheiten wird das System sehr sicher, zuverlässig und preiswert.

Besonders vorteilhaft ist es, dass der Schwingungserzeuger zum Erzeugen einer Sinusschwingung eingerichtet ist. Grundsätzlich kann beispielsweise auch eine Rechteckschwingung vorgesehen sein, die jedoch unter Umständen aufgrund ihrer Oberwellen nachteilig sein kann.

Um die Zuverlässigkeit zu erhöhen und um insbesondere Interferenzeffekten vorzubeugen, kann es vorteilhaft sein, dass der Schwingungserzeuger galvanisch isoliert von einem Bordnetz des Objektes, insbesondere des Fahrzeuges, ist.

Ferner ist es vorteilhaft, dass der Schwingungserzeuger Mittel zum Einstellen einer Schwingungsamplitudenhöhe aufweist. Dies ermöglicht eine Einstellung der Reichweite des Nahfeldes und somit eine Einstellung der Größe des Nachweisbereiches.

Ferner ist es zweckmäßig, dass der Schwingungserzeuger Mittel zum Einstellen der Schwingungsfrequenz aufweist. Hierdurch kann der Schwingungserzeuger auf verschiedene Nahfelddetektoren abgestimmt werden. Mittels des Schwingungserzeugers wird zweckmäßigerweise eine Wechselspannung erzeugt, die an der Streufeldelektrode und deren durch die metallische Struktur gebildete Gegenelektrode angelegt wird.

Gelangt eine Person in ein um das Objekt herum generiertes Nahfeld, so ruft das influenzierende E-Feld im menschlichen Körper Verschiebeströme hervor und es kann zu einer lokalen Feldstärkeerhöhung im Bereich des menschlichen Körpers kommen. Diese Verschiebeströme können entlang des Körpers detektiert werden.

Vor diesem Hintergrund ist erfindungsgemäß vorgesehen, dass die zweite Nahfeldeinrichtung für eine Kopplung mit dem Nahfeld zum einen mit einer dem Körper der Person zugeordneten Körperelektrode und zum anderen mit einer von der Körperelektrode beabstandeten zweiten Elektrode verbunden ist, die eine Gegenelektrode zur Körperelektrode bildet. Durch den nach diesem Gedanken vorgesehenen engen Kontakt zwischen der Körperelektrode und dem Körper der Person kann der Körper der Person selbst als eine Art Antenne, Verstärker und/oder Sammelelektrode dienen. Messungen haben ergeben, dass durch Verwendung einer Körperelektrode ein Signalanstieg um den Faktor 20 oder mehr erhalten werden kann.

Die Körperelektrode ist nach der Erfindung zur Anlage am menschlichen Körper vorgesehen. Für ein möglichst großes Nahfeldsignal sollte die Körperelektrode möglichst nahe am Körper getragen werden. Die Körperelektrode kann für einen kapazitiven oder für einen leitenden, das heißt ohmschen, Kontakt mit dem menschlichen Körper vorgesehen sein, so dass sie das Signal und/oder den Verschiebungsstrom im Körper kapazitiv oder ohmsch aufnimmt.

Die Verwendung einer Körperelektrode und somit die Heranziehung des menschlichen Körpers als "Sammelelektrode" ist noch in anderer Hinsicht vorteilhaft. So können unter Umständen, auch aufgrund von Überlagerungseffekten, in der Feldverteilung des Nahfeldes lokal begrenzte Fehlstellen auftreten. Wird dabei entsprechend der bevorzugten Ausführungsform der gesamte Körper der Person als Empfangselektrode benutzt, ist eine vergleichsweise große Elektrode gegeben, welche die "Fehlstellen" überbrücken kann. Überdies wird der Einfluss von solchen Fehlstellen durch eine Relativbewegung zwischen Objekt und Person vermindert.

Die Gegenelektrode zur Körperelektrode ist geeigneterweise von der Körperelektrode räumlich beabstandet und/oder elektrisch hiervon isoliert. Vorzugsweise weist die Gegenelektrode verglichen mit der Körperelektrode eine unterschiedliche Geometrie auf.

Eine besonders wirksame Ankopplung an den Körper und somit eine besonders hohe Empfindlichkeit kann nach der Erfindung dadurch erhalten werden, dass die Körperelektrode als Ringelektrode ausgebildet ist, die insbesondere zum Umschließen eines Armes oder eines Beines des Körpers vorgesehen ist. Die Ringelektrode kann dabei auch unterbrochen ausgebildet sein. Vorzugsweise weist sie einen Verschluss auf, mit dem der Ring zum Anlegen oder Entfernen geöffnet werden kann.

In Versuchen hat sich gezeigt, dass bei einer Anordnung der Körperelektrode im Unterschenkelbereich und/oder Fußbereich eine besonders hohe Signalstärke erhalten werden kann. Grundsätzlich kann die Körperelektrode jedoch an jeder beliebigen Stelle des Körpers platziert werden.

Die Körperelektrode und/oder die Gegenelektrode der zweiten Nahfeldeinrichtung sind vorzugsweise gegenüber der Umgebung elektrisch isoliert, um unerwünschte Kurzschlüsse, insbesondere bei Bewegung der Person, zu vermeiden. Auch die Streufeldelektrode kann gegenüber der Umgebung elektrisch isoliert sein.

Die Erfindung betrifft überdies ein Warnverfahren, bei dem ein erfindungsgemäßes Annäherungswarnsystem vorgesehen wird und mittels der Warneinrichtung ein Warnsignal ausgegeben wird, wenn eine Person in den Nachweisbereich gelangt.

Ein Ziel der Erfindung ist es, ein System zu schaffen, das es ermöglicht, die zu schützende Person mit einem passiven Detektor zu versehen, mit dem detektiert werden kann, ob sich die Person in einem elektrischen Nahfeld befindet. Das System wird dabei über eine Frequenz so stimuliert, dass der Detektor selektiv erkennen kann, ob es sich bei einem empfangenen Feld um ein auf eine Gefahr hinweisendes Feld handelt. Als elektrisches Feld wird dabei ein Nahfeld verwendet, wodurch sichergestellt ist, dass sich die Reichweite des Feldes nur über einen Bereich erstreckt, der räumlich eng mit dem gefährdenden Objekt verbunden ist. Das Nahfeld bildet dabei um das metallische Objekt eine "Aura" mit wechselnder Ladung, je nachdem wie die mit Wechselspannung beaufschlagte Streufeldelektrode augenblicklich geladen ist.

Ein Vorteil des erfindungsgemäßen Systems liegt darin, dass jede metallische Ankopplung, beispielsweise eines Anhängers, automatisch zur Erweiterung der "Aura" führt, die dabei lediglich schwächer wird. Hierdurch wird eine besonders hohe Sicherheit erzielt. Insbesondere im Bereich des Objektes kann es zu Reflexionen kommen, die zu Sekundärfeldern führen, wobei die Sekundärfelder jedoch ebenfalls zum Gesamtfeld beitragen. Festzustellen ist, dass sich die Erzeugung eines großen Streufeldes in der Regel positiv auf die Feldgenerierung auswirkt. Im Gegensatz zum Stand der Technik ist nach der Erfindung insbesondere vorgesehen, das Chassis des Objektes selbst als Elektrode zu verwenden und nicht lediglich in das Chassis einzukoppeln:

Die Erfindung wird nachfolgend anhand bevorzugter Ausführungsbeispiele näher erläutert, die schematisch in den beiliegenden Zeichnungen dargestellt sind. In den Zeichnungen zeigen:
- Fig. 1: ein erstes Ausführungsbeispiel eines erfindungsgemäßen An- näherungswarnsystems;
- Fig. 2: eine Detailansicht des Nahfelddetektors aus Fig. 1;
- Fig.3: eine weitergehende Detailansicht des Nahfelddetektors aus den Figuren 1 und 2;
- Fig. 4: verschiedene Anordnungsmöglichkeiten des Nahfelddetektors der Figuren 2 und 3 an einer Person;
- Fig. 5: ein Ausführungsbeispiel eines Nahfelderzeugers zur Verwen- dung in einem erfindungsgemäßen System bei Anordnung an einem Personenkraftfahrzeug; und
- Fig. 6: ein weiteres Ausführungsbeispiel eines erfindungsgemäßen Systems mit einer detaillierten Darstellung des Nahfelddetek- tors.

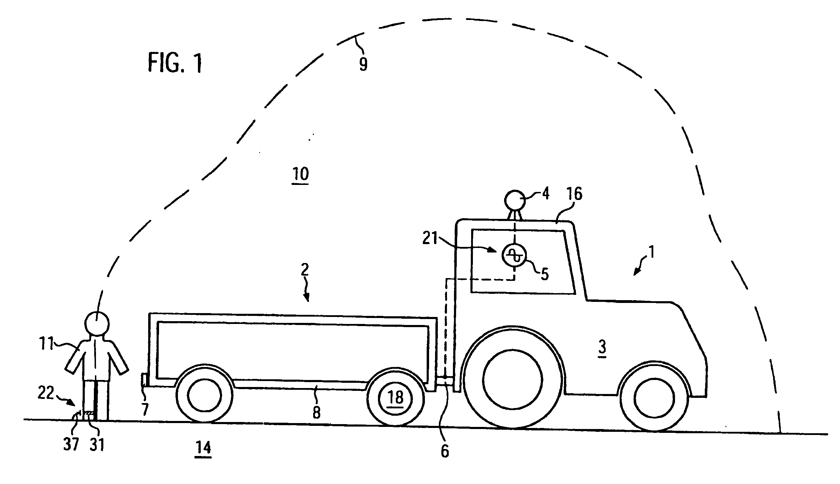

Ein erstes Ausführungsbeispiel eines erfindungsgemäßen Systems ist in Fig. 1 dargestellt. Das dargestellte System ist an einem Objekt 1, 2 vorgesehen, welches durch einen Traktor 1 mit einem angehängten Anhänger 2 gebildet wird. Das Objekt 1, 2 weist eine metallische Außenstruktur 3, 8 auf, die durch eine metallische Karosserie mit Chassis des Traktors 1 und einen Rahmen 8 des Anhängers 2 gebildet wird.

Auf dem Dach 16 des Traktors 1 ist eine Streufeldelektrode 4 vorgesehen. Diese Streufeldelektrode 4 ist elektrisch isoliert gegenüber der Karosserie 3 sowie gegenüber einem metallischen Fahrgestell des Traktors 1. Im dargestellten Ausführungsbeispiel ist die Streufeldelektrode 4 als Kugelelektrode ausgebildet. Grundsätzlich kann sie jedoch auch als Flächenelektrode, Kegelelektrode usw. ausgebildet sein, wobei wichtig ist, dass sie zum Traktor 1 und dessen Umgebung ein möglichst großes Streufeld aufbaut.

Die Streufeldelektrode 4 ist elektrisch mit einem als Frequenzgenerator ausgebildeten Schwingungserzeuger 5 verbunden. Der andere Pol des Schwingungserzeugers 5 ist elektrisch mit der metallischen Außenstruktur 3 des Traktors 1 verbunden. Der Schwingungserzeuger 5 ist dabei Teil einer ersten Nahfeldeinrichtung 21, die als Nahfelderzeuger ausgebildet ist.

Die metallische Außenstruktur 3 des Traktors 1 und die metallische Außenstruktur 8 des Anhängers 2 sind über eine mechanische Kupplung 6 miteinander verbunden, die auch eine elektrische Verbindung zwischen den Außenstrukturen 3 und 8 herstellt. Im Bereich dieser Kupplung 6 ist der Schwingungserzeuger 5 mit den beiden Außenstrukturen 3 und 8 verbunden. Zusätzlich oder alternativ zur Kupplung 6 kann eine nicht dargestellte elektrische Streckverbindung zwischen den Außenstrukturen 3 und 8 gegeben sein. Entsprechende Stromleitungen können beispielsweise zu einem Rückstrahler 7 führen und ebenfalls eine Gegenelektrode zur Streufeldelektrode 4 bilden. Auch die Felgen 18 der Objekte 1 und/oder 2 können mit dem entsprechenden Fahrgestell eine Gegenelektrode zur Streufeldelektrode 4 bilden.

Um das gesamte Objekt 1, 2 bildet sich ein quasistatisches E-Feld, das heißt ein Nahfeld 10 aus, dessen Stärke und/oder Dichte nach außen hin schnell abnimmt. Exemplarisch für das Nahfeld 10 ist in Fig. 1 eine Linie 9 konstanter Feldstärke gezeigt.

Das Nahfeld 10 durchflutet auch eine in der Umgebung des Objektes 1, 2 befindliche zu schützende Person 11 und influenziert in ihr Verschiebeströme, die an einer als Detektor ausgebildeten zweiten Nahfeldeinrichtung 22, die von der Person 11 getragen wird, detektiert werden können.

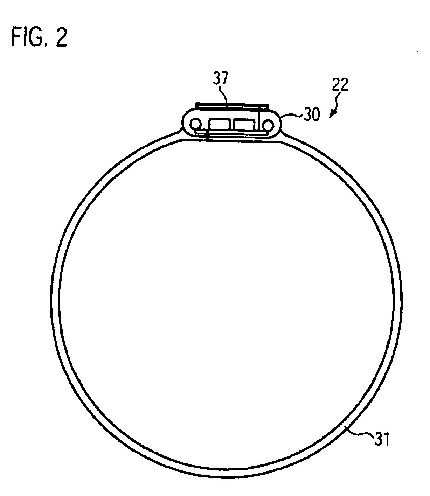

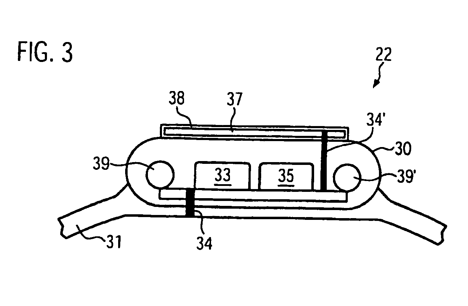

Die zweite Nahfeldeinrichtung 22 ist im Detail in den Figuren 2 und 3 dargestellt. Sie weist eine ringförmige Körperelektrode 31 auf, die an einem Arm oder an einem Bein der Person 11 angelegt werden kann und möglichst nahe am Körper getragen wird. Die Körperelektrode 31 kann dabei kapazitiv und/oder ohmsch mit dem Körper gekoppelt sein. Demgemäß kann die Körperelektrode 31 nach außen hin isoliert oder leitend ausgebildet sein.

An der Körperelektrode 31 ist ein isolierend ausgebildetes Gehäuse 30 vorgesehen, in welchem eine Elektronik 33 sowie eine Batterie 35 zur Speisung der Elektronik 33 angeordnet sind.

An einer der Körperelektrode 31 abgewandte Flachseite des Gehäuses 30 ist eine ebene Gegenelektrode 37 angeordnet. Die Gegenelektrode 37 besteht aus Metall und kann beispielsweise durch eine kupferkaschierte Leiterplatte gebildet sein. Auf der Oberfläche der Gegenelektrode 37 ist eine Isolierung 38 vorgesehen. Wie in Fig. 1 dargestellt ist, kann über diese Gegenelektrode 37 eine kapazitive Kopplung zur Erde 14 hin hergestellt werden, über die sich der Übertragungskreis zwischen den beiden Nahfeldeinrichtungen 21, 22 schließt.

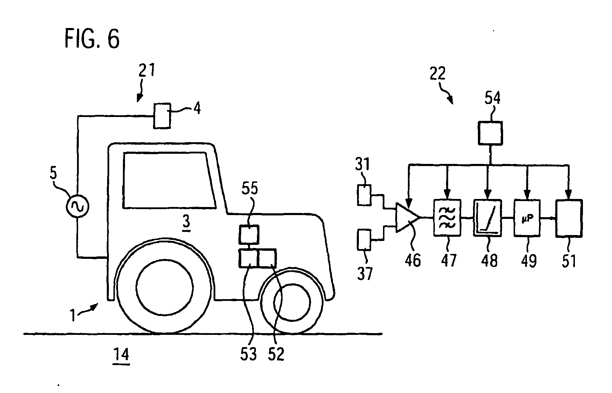

Zum Herstellen einer elektrischen Verbindung zwischen der Elektronik 33 und der Körperelektrode 31 sowie der Gegenelektrode 37 sind, wie in Fig. 3 gezeigt, Kontaktstifte 34 beziehungsweise 34' im Gehäuse 30 vorgesehen. Überdies befinden sich im Inneren des Gehäuses 30 noch zwei Funkantennen 39 und 39'. Diese dienen dem Betrieb eines Funksenders 51 und eines Funkempfängers 54, die im Zusammenhang mit Fig. 6 näher beschrieben sind. Geeigneterweise ist eine der Funkantennen 39 für einen Betrieb mit einer Frequenz von 433 MHz und die andere Funkantenne 39' für einen Betrieb mit einer Frequenz von 868 MHz vorgesehen.

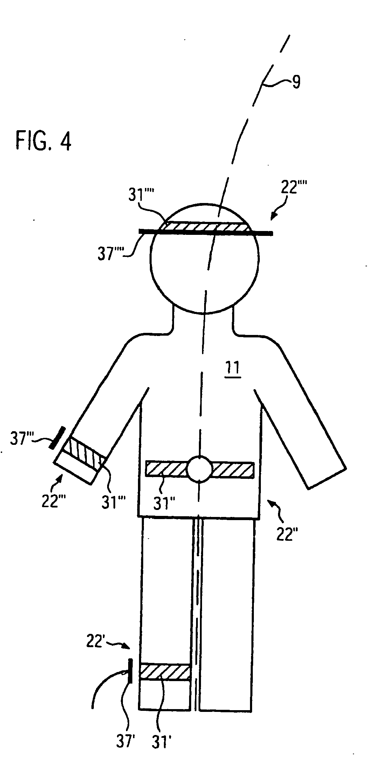

Fig. 4 zeigt unterschiedliche Anordnungsmöglichkeiten der als Detektor ausgebildeten zweiten Nahfeldeinrichtung 22 am Körper der Person 11. Im Falle der Nahfeldeinrichtung 22' ist die zugehörige Körperelektrode 31' am Bein des Trägers angeordnet. Im Falle der Nahfeldeinrichtung 22" ist die Körperelektrode 31" im Bereich des Bauches des Trägers angeordnet. Im Falle der Nahfeldeinrichtung 22"' ist die Körperelektrode 31"' am Arm des Trägers angeordnet. Im Falle der Nahfeldeinrichtung 22"" umgibt die Körperelektrode 31"" den Kopf des Trägers in Form einer Ringelektrode. Die Gegenelektrode 37"" ist hierbei in Form einer Hutkrempe ausgebildet.

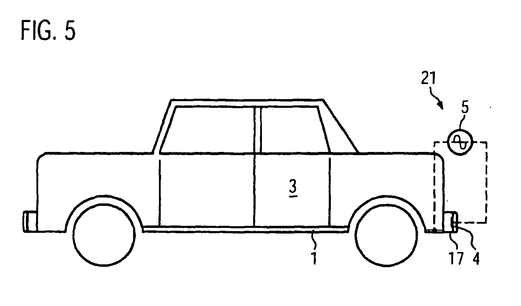

Ein weiteres Ausführungsbeispiel für die Anordnung einer als Nahfelderzeuger ausgebildeten ersten Nahfeldeinrichtung 21 ist in Fig. 5 dargestellt. Beim Ausführungsbeispiel der Fig. 5 ist die Streufeldelektrode 4 des Schwingungserzeugers 5 im Inneren einer aus Kunststoff ausgebildeten Stoßstange 17 angeordnet. Als Gegenelektrode wird die metallische Außenstruktur 3, das heißt die Karosserie, eines als PKW ausgebildeten Objektes 1 verwendet.

Ein weiteres Ausführungsbeispiel eines erfindungsgemäßen Systems ist in Fig. 6 dargestellt. Ähnlich wie im Ausführungsbeispiel der Fig. 1 ist auch im Ausführungsbeispiel der Fig. 6 eine erste Nahfeldeinrichtung 21 mit einem Schwingungserzeuger 5 vorgesehen, der einerseits mit einer Streufeldelektrode 4 und andererseits mit der metallischen Außenstruktur 3 eines als Traktor ausgebildeten Objektes 1 verbunden ist. Der Schwingungserzeuger 5 kann beispielsweise eine Betriebsfrequenz von 5 MHz und eine Ausgangsspannung von ca. 0,1 V bis ca. 500 V (0 V < U < 500 V) aufweisen. Mittels der ersten Nahfeldeinrichtung 21 wird ein als Wechselfeld ausgebildetes Nahfeld erzeugt, welches das Objekt 1 umgibt und einen Nachweisbereich für die Annäherung definiert.

Die von einer Person zu tragende, als Detektor ausgebildete zweite Nahfeldeinrichtung 22 ist in Fig. 6 auf der rechten Seite dargestellt. Diese zweite Nahfeldeinrichtung 22 kann zur Detektion grundsätzlich auch einen invertierten Generator aufweisen.

Die Körperelektrode 31 sowie die Gegenelektrode 37 der Nahfeldeinrichtung 22, die insbesondere als Masse-Bezugselektrode dienen kann, sind gemäß dem Ausführungsbeispiel der Fig. 6 an einen Verstärker 46 angeschlossen. An diesen Verstärker 46 schließen sich als Bandpassfilter ausgebildete Mittel 47 zur Unterscheidung des vom Schwingungserzeuger 5 erzeugten Nahfeldes von anderen Feldern an. Hieran schließt sich wiederum eine als Schwellwertschalter ausgebildete Entscheidungsschaltung 48 an, auf welche eine Auswerteelektronik 49 folgt. An der Auswerteelektronik 49 ist wiederum ein erster Funksender 51 angeordnet.

Kommt eine Person und somit die zugeordnete zweite Nahfeldeinrichtung 22 der Fig. 6 in den Bereich des Nahfeldes der ersten Nahfeldeinrichtung 21, so empfangen die Elektroden 31 und 37 das wechselnde Nahfeld. Wird die Körperelektrode 31 dabei nahe am Körper getragen, so kann der Messeffekt um einen erheblichen Faktor, beispielsweise 90, vergrößert werden.

Das Signal der Elektroden 31, 37 wird im Verstärker 46 verstärkt und dem Bandpassfilter 47 zugeführt, der auf die Frequenz des Schwingungserzeugers 5 abgestimmt ist. Das Signal des Bandpassfilters 47 wird dem Schwellwertschalter 48 zugeführt, dessen Ausgangssignal wiederum auf die Auswerteelektronik 49 geleitet wird. Es ist auch möglich, das Signal, das vom Bandpassfilter 47 kommt, auf einen A/D-Wandler zu geben und es zur Abstandsbestimmung auszuwerten.

Wird die Schwelle des Schwellwertschalters 48 überschritten, so ändert der erste Funksender 51 das abgestrahlte Signal. Das abgestrahlte Signal des ersten Funksenders 51 wird von einem ersten Funkempfänger 53 am Objekt 1 empfangen. Deutet das empfangene Signal auf eine Schwellwertüberschreitung und somit eine Annäherung hin, gibt eine am Objekt 1 vorgesehene und mit dem ersten Funkempfänger 53 gekoppelte Warneinrichtung 55 ein Warnsignal aus.

Am Objekt 1 ist darüber hinaus ein zweiter Funksender 52 vorgesehen. Ein korrespondierender zweiter Funkempfänger 54 ist an der zweiten Nahfeldeinrichtung 22 angeordnet. Der zweite Funkempfänger 54 ist dabei so ausgebildet, dass er die Einrichtungen 46, 47, 48, 49 und/oder 51 erst dann aktiviert, wenn er ein Funksignal vom zweiten Funksender 52 erhält.

## Patentansprüche

1. Annäherungsnachweissystem zum Nachweis einer Annäherung einer Person (11) an ein Objekt (1, 2), welches zumindest bereichsweise eine metallische Außenstruktur (3, 8) aufweist, mit
- zumindest einer ersten Nahfeldeinrichtung (21), die dem Objekt (1, 2) zugeordnet ist, und einer zweiten Nahfeldeinrichtung (22), die der Person (11) zugeordnet ist, wobei die erste und die zweite Nahfeldeinrichtung (21, 22) eine Übertragungsstrecke für ein elektrisches Nahfeld (10) bilden, und
- wobei die zweite Nahfeldeinrichtung (22) für eine Kopplung mit dem Nahfeld (10) zum einen mit einer dem Körper der Person (11) zugeordneten Körperelektrode (31) und zum anderen mit einer von der Körperelektrode (31) beabstandeten zweiten Elektrode verbunden ist, die eine Gegenelektrode (37) zur Körperelektrode (31) bildet,
**dadurch gekennzeichnet,**
- **dass** das Annäherungsnachweissystem als Annäherungswarnsystem ausgebildet ist und eine Warneinrichtung (55) aufweist, die bei Eintritt der Person (11) mit der zweiten Nahfeldeinrichtung (22) in einen Nachweisbereich, in dem eine Übertragung des Nahfeldes (10) über die Übertragungsstrecke stattfindet und der die gesamte metallische Außenstruktur (3, 8) des Objektes (1, 2) zumindest annähernd einhüllt, ein Annäherungswarnsignal ausgibt, und
- **dass** die erste Nahfeldeinrichtung (21) für eine Kopplung mit dem Nahfeld (10) zum einen mit zumindest einer Streufeldelektrode (4) und zum anderen mit der metallischen Außenstruktur (3, 8) des Objektes (1, 2) verbunden ist, so dass die Außenstruktur (3, 8) eine Gegenelektrode zur Streufeldelektrode (4) bildet.

2. Annäherungsnachweissystem nach Anspruch 1,
**dadurch gekennzeichnet,**
**dass** die dem Objekt (1, 2) zugeordnete erste Nahfeldeinrichtung (21) ein Nahfelderzeuger zum Erzeugen des Nahfeldes (10), und
**dass** die der Person (11) zugeordnete zweite Nahfeldeinrichtung (22) ein Nahfelddetektor zum Empfang des Nahfeldes (10) ist.

3. Annäherungsnachweissystem nach einem der vorstehenden Ansprüche,
**dadurch gekennzeichnet,**
**dass** das Objekt (1, 2) eine Maschine ist.

4. Annäherungsnachweissystem nach einem der vorstehenden Ansprüche,
**dadurch gekennzeichnet,**
**dass** das Objekt (1, 2) ein landwirtschaftliches Fahrzeug und die metallische Außenstruktur (3) eine Karosserie des Fahrzeuges ist.

5. Annäherungsnachweissystem nach Anspruch 4,
**dadurch gekennzeichnet,**
**dass** die Streufeldelektrode (4) oberhalb eines Daches (16) der Karosserie angeordnet ist, oder
**dass** die Streufeldelektrode (4) in einer Stoßstange (17) der Karosserie angeordnet ist.

6. Annäherungsnachweissystem nach einem der vorstehenden Ansprüche,
**dadurch gekennzeichnet,**
**dass** die Streufeldelektrode (4) als Kugelelektrode ausgebildet ist oder
**dass** die Streufeldelektrode (4) länglich ausgebildet ist und senkrecht zu benachbarten Abschnitten der metallischen Außenstruktur (3, 8) verläuft.

7. Annäherungsnachweissystem nach einem der vorstehenden Ansprüche,
**dadurch gekennzeichnet,**
**dass** die metallische Außenstruktur (3, 8) geerdet sein kann.

8. Annäherungsnachweissystem nach einem der vorstehenden Ansprüche,
**dadurch gekennzeichnet,**
**dass** die metallische Außenstruktur (3, 8) mehrteilig ausgebildet ist, wobei zwischen den einzelnen Teilen eine elektrische, metallische, lösbare Kopplung gegeben ist.

9. Annäherungsnachweissystem nach einem der vorstehenden Ansprüche,
**dadurch gekennzeichnet,**
**dass** das elektrische Nahfeld (10) ein Wechselfeld ist,
wobei eine Schwingungsfrequenz des Wechselfeldes im Bereich von 10 kHz bis 10 MHz liegt.

10. Annäherungsnachweissystem nach Anspruch 9,
**dadurch gekennzeichnet,**
**dass** die Schwingungsfrequenz des Wechselfeldes etwa 5 MHz beträgt.

11. Annäherungsnachweissystem nach Anspruch 9 oder 10,
**dadurch gekennzeichnet,**
**dass** das Wechselfeld ein kontinuierliches (CW) Wechselfeld ist.

12. Annäherungsnachweissystem nach einem der Ansprüche 2 bis 11,
**dadurch gekennzeichnet,**
- **dass** der Nahfelddetektor Mittel (47) zur Unterscheidung des vom Nahfelderzeuger erzeugten Nahfeldes (10) von anderen Feldern, nämlich einen Bandpassfilter, aufweist, und
- **dass** den Mitteln (47) zur Unterscheidung eine Entscheidungsschaltung (48), nämlich ein Schwellwertschalter, nachgeschaltet ist, die auf Grundlage einer Signalstärke des am Nahfelddetektor vorliegenden Nahfeldes (10) über eine Annäherung der Person (11) an das Objekt (1, 2) entscheidet.

13. Annäherungsnachweissystem nach einem der Ansprüche 2 bis 12,
**dadurch gekennzeichnet,**
**dass** der Nahfelddetektor einen Funksender (51) aufweist, und dass der Funksender (51) dafür eingerichtet ist, die Beschaffenheit eines von ihm erzeugten Funksignals abhängig von einer Signalstärke des am Nahfelddetektor vorliegenden Nahfeldes (10) zu ändern.

14. Annäherungsnachweissystem nach Anspruch 13,
**dadurch gekennzeichnet,**
**dass** die Warneinrichtung (55) am Objekt (1, 2) angeordnet ist und einen Funkempfänger (53) zum Nachweis und/oder zur Auswertung des Funksignals vom Funksender (51) aufweist.

15. Annäherungsnachweissystem nach einem der Ansprüche 2 bis 14,
**dadurch gekennzeichnet,**
**dass** dem Objekt (1, 2) ein zweiter Funksender (52) und der Person (11) ein zweiter Funkempfänger (54) zugeordnet ist, wobei der zweite Funkempfänger (54) Mittel zum Aktivieren des Nahfelddetektors bei Empfang eines Funksignals vom zweiten Funksender (52) aufweist.

16. Annäherungsnachweissystem nach einem der Ansprüche 2 bis 15,
**dadurch gekennzeichnet,**
- **dass** der Nahfelderzeuger einen elektrischen Schwingungserzeuger (5) zum Erzeugen des Wechselfeldes aufweist,
- wobei der Schwingungserzeuger (5) Mittel zum Konstanthalten einer Schwingungsfrequenz aufweist.

17. Annäherungsnachweissystem nach Anspruch 16,
**dadurch gekennzeichnet,**
**dass** der Schwingungserzeuger (5) zum Erzeugen einer Sinusschwingung eingerichtet ist.

18. Annäherungsnachweissystem nach Anspruch 16 oder 17,
**dadurch gekennzeichnet,**
- **dass** der Schwingungserzeuger (5) galvanisch isoliert von einem Bordnetz des Objektes (1, 2) ist,
- **dass** der Schwingungserzeuger (5) Mittel zum Einstellen einer Schwingungsamplitudenhöhe aufweist, und/oder
- **dass** der Schwingungserzeuger (5) Mittel zum Einstellen einer Schwingungsfrequenz aufweist.

19. Annäherungsnachweissystem nach einem der vorstehenden Ansprüche,
**dadurch gekennzeichnet,**
**dass** die Körperelektrode (31) als Ringelektrode ausgebildet ist, die zum Umschließen eines Armes oder eines Beines des Körpers vorgesehen ist.

20. Annäherungsnachweissystem nach einem der vorstehenden Ansprüche,
**dadurch gekennzeichnet,**
**dass** die Körperelektrode (31) und/oder die Gegenelektrode (37) der zweiten Nahfeldeinrichtung (22) gegenüber der Umgebung elektrisch isoliert ist.

21. Warnverfahren,
**dadurch gekennzeichnet,**
**dass** ein Annäherungsnachweissystem nach einem der vorstehenden Ansprüche vorgesehen wird und mittels der Warneinrichtung (55) ein Warnsignal ausgegeben wird, wenn eine Person (11) in den Nachweisbereich gelangt.

## Claims

1. Approach detection system for detecting when a person (11) approaches an object (1, 2), which has a metal outer structure (3, 8) at least in regions, comprising
- at least a first near-field device (21) which is associated with the object (1, 2) and a second near-field device (22) which is associated with the person (11), wherein the first and the second near-field device (21, 22) form a transmission link for an electric near field (10), and
- wherein the second near-field device (22), for the purpose of coupling to the near field (10), is connected firstly to a body electrode (31) associated with the body of the person (11) and secondly to a second electrode spaced apart from the body electrode (31), which forms a counter-electrode (37) to the body electrode (31)
**characterised in that**
- the approach detection system is designed as approach warning system and has a warning device (55) which outputs an approach warning signal if the person (11) with the second near-field device (22) enters a detection region in which a transmission of the near field (10) via the transmission link takes place, and which at least approximately encloses the entire metal outer structure (3, 8) of the object (1, 2), and
- the first near-field device (21), for the purpose of coupling to the near field (10), is connected firstly to a stray field electrode (4) and secondly to the metal outer structure (3, 8) of the object (1, 2), so that the outer structure (3, 8) forms a counter-electrode to the stray field electrode (4).

2. Approach detection system according to claim 1,
**characterised in that**
the first near-field device (21) associated with the object (1, 2) is a near field generator for generating the near field (10), and
the second near-field device (22) associated with the person (11) is a near field detector for receiving the near field (10).

3. Approach detection system according to one of the preceding claims,
**characterised in that**
the object (1, 2) is a machine.

4. Approach detection system according to one of the preceding claims,
**characterised in that**
the object (1, 2) is an agricultural vehicle and the metal outer structure (3) is a bodywork of the vehicle.

5. Approach detection system according to claim 4,
**characterised in that**
the stray field electrode (4) is arranged above a roof (16) of the bodywork, or the stray field electrode (4) is arranged in a bumper (17) of the bodywork.

6. Approach detection system according to one of the preceding claims,
**characterised in that**
the stray field electrode (4) is designed as ball electrode or that the stray field electrode (4) has an elongate design and extends perpendicular to adjacent sections of the metal outer structure (3, 8).

7. Approach detection system according to one of the preceding claims,
**characterised in that**
the metal outer structure (3, 8) can be earthed.

8. Approach detection system according to one of the preceding claims,
**characterised in that**
the metal outer structure (3, 8) is formed in multiple parts, wherein between the individual parts an electric, metal, releasable coupling is provided.

9. Approach detection system according to one of the preceding claims,
**characterised in that**
the electric near field (10) is an alternating field,
wherein an oscillation frequency of the alternating field lies in the range from 10 kHz to 10 MHz.

10. Approach detection system according to claim 9,
**characterised in that**
the oscillation frequency of the alternating field is around 5 MHz.

11. Approach detection system according to claim 9 or 10,
**characterised in that**
the alternating field is a continuous (CW) alternating field.

12. Approach detection system according to claims 2 to 11,
**characterised in that**
- the near field detector comprises means (47) for differentiating the near field (10) generated by the near field generator from other fields, namely a band pass filter, and
- a decision circuit (48), namely a threshold value switch, is connected downstream of the means (47) for differentiating, which decides on the basis of a signal strength of the near field (10) present on the near field detector whether the person (11) is approaching the object (1, 2).

13. Approach detection system according to one of the claims 2 to 12,
**characterised in that**
the near field detector comprises a radio transmitter (51), and that the radio transmitter (51) is arranged to change the composition of a radio signal generated by it in dependence upon a signal strength of the near field (10) present on the near field detector.

14. Approach detection system according to claim 13,
**characterised in that**
the warning device (55) is arranged on the object (1, 2) and comprises a radio receiver (53) for detecting and / or evaluating the radio signal from the radio transmitter (51).

15. Approach detection system according to one of the claims 2 to 14,
**characterised in that**
a second radio transmitter (52) is associated with the object (1, 2) and a second radio receiver (54) is associated with the person (11), wherein the second radio receiver (54) comprises means for activating the near field detector upon receipt of a radio signal from the second radio transmitter (52).

16. Approach detection system according to one of the claims 2 to 15,
**characterised in that**
- the near field generator comprises an electric oscillation generator (5) for generating the alternating field,
- wherein the oscillation generator (5) comprises means for keeping an oscillation frequency constant.

17. Approach detection system according to claim 16,
**characterised in that**
the oscillation generator (5) is arranged to generate a sinus oscillation.

18. Approach detection system according to claim 16 or 17,
**characterised in that**
- the oscillation generator (5) is galvanically insulated from an onboard network of the object (1, 2),
- the oscillation generator (5) comprises means for adjusting an oscillation amplitude level, and / or
the oscillation generator (5) comprises means for adjusting an oscillation frequency.

19. Approach detection system according to one of the preceding claims,
**characterised in that,**
the body electrode (31) is designed as ring electrode which is provided to surround an arm or a leg of the body.

20. Approach warning system according to one of the preceding claims,
**characterised in that**
the body electrode (31) and / or the counter-electrode (37) of the second near-field device (22) is / are electrically insulated in relation to the environment.

21. Warning process
**characterised in that**
an approach detection system according to one of the preceding claims is provided and by means of the warning device (55) a warning signal is output if a person (11) enters the detection region.

## Revendications

1. Système de vérification d'approche permettant de détecter une personne (11) en approche d'un objet (1, 2) qui comprend au moins par endroits une structure extérieure métallique (3, 8), avec
- au moins un premier dispositif de champ proche (21) qui est associé à l'objet (1, 2) et un deuxième dispositif (22) de champ proche qui est associé à la personne (11), le premier et le deuxième dispositifs (21, 22) de champ proche formant un chemin de transmission pour un champ électrique proche (10), et
- dans lequel le deuxième dispositif (22) de champ proche est relié, pour un couplage avec le champ proche (10), d'une part à une électrode corporelle (31) associée au corps de la personne (11) et d'autre part à une deuxième électrode distante de l'électrode corporelle (31) qui forme une contre-électrode (37) par rapport à l'électrode corporelle (31),
***caractérisé***
- ***en ce que*** le système de vérification d'approche est conformé en système d'avertissement d'approche et comprend un dispositif d'avertissement (55) qui délivre un signal d'avertissement d'approche en cas de pénétration d'une personne (11) portant le deuxième dispositif de champ proche (22) dans une zone de vérification dans laquelle se produit une transmission du champ proche (10) sur le chemin de transmission et qui enveloppe au moins approximativement toute la structure extérieure métallique (3, 8) de l'objet (1, 2), et
- ***en ce que*** le premier dispositif de champ proche (21) est relié, pour un couplage avec le champ proche (10), d'une part à au moins une électrode (4) de champ diffus et d'autre part à la structure extérieure métallique (3, 8) de l'objet (1, 2), de façon que la structure extérieure (3, 8) forme une contre-électrode par rapport à l'électrode de champ diffus (4).

2. Système de vérification d'approche selon la revendication 1, ***caractérisé***
***en ce que*** le premier dispositif (21) de champ proche associé à l'objet (1, 2) est un générateur de champ proche destiné à produire le champ proche (10) et
***en ce que*** le deuxième dispositif (22) de champ proche associé à la personne (11) est un détecteur de champ proche pour la réception du champ proche (10).

3. Système de vérification d'approche selon l'une quelconque des revendications précédentes, ***caractérisé en ce que*** l'objet (1, 2) est une machine.

4. Système de vérification d'approche selon l'une quelconque des revendications précédentes, ***caractérisé en ce que*** l'objet (1, 2) est un véhicule agricole et la structure extérieure métallique (3) est une carrosserie du véhicule.

5. Système de vérification d'approche selon la revendication 4, ***caractérisé***
***en ce que*** l'électrode (4) de champ diffus est placée au-dessus d'un pavillon (16) de la carrosserie, ou
***en ce que*** l'électrode (4) de champ diffus est placée dans un pare-choc (17) de la carrosserie.

6. Système de vérification d'approche selon l'une quelconque des revendications précédentes, ***caractérisé***
***en ce que*** l'électrode (4) de champ diffus est conformée en électrode sphérique, ou ***en ce que*** l'électrode (4) de champ diffus est réalisée oblongue et s'étend perpendiculairement à des sections voisines de la structure extérieure métallique (3, 8).

7. Système de vérification d'approche selon l'une quelconque des revendications précédentes, ***caractérisé en ce que*** la structure extérieure métallique (3, 8) peut être reliée à la terre.

8. Système de vérification d'approche selon l'une quelconque des revendications précédentes, ***caractérisé en ce que*** la structure extérieure métallique (3, 8) est réalisée en plusieurs pièces, un couplage électrique métallique amovible étant présent entre les différentes pièces.

9. Système de vérification d'approche selon l'une quelconque des revendications précédentes, ***caractérisé en ce que*** le champ électrique proche (10) est un champ alternatif,
une fréquence d'oscillations du champ alternatif étant comprise entre 10 kHz et 10 MHz.

10. Système de vérification d'approche selon la revendication 9, ***caractérisé en ce que*** la fréquence d'oscillations du champ alternatif est égale à environ 5 MHz.

11. Système de vérification d'approche selon la revendication 9 ou 10, ***caractérisé en ce que*** le champ alternatif est un champ alternatif continu (CW).

12. Système de vérification d'approche selon l'une quelconque des revendications 2 à 11, ***caractérisé***
- ***en ce que*** le détecteur de champ proche comprend des moyens (47) pour distinguer le champ proche (10) produit par le générateur de champ proche d'autres champs, à savoir un filtre passe-bande, et
- ***en ce qu***'après les moyens (47) de différenciation est placé un circuit de décision (48), à savoir un commutateur à seuil, qui, à partir d'une intensité de signal du champ proche (10) présent sur le détecteur de champ proche, décide de l'approche de la personne (11) par rapport à l'objet (1, 2).

13. Système de vérification d'approche selon l'une quelconque des revendications 2 à 12, ***caractérisé***
***en ce que*** le détecteur de champ proche comprend un émetteur radio (51) et
***en ce que*** l'émetteur radio (51) est conçu pour modifier les caractéristiques d'un signal radio produit par lui en fonction de l'intensité de signal du champ proche (10) présent sur le détecteur de champ proche.

14. Système de vérification d'approche selon la revendication 13, ***caractérisé en ce que*** le dispositif d'avertissement (55) est placé sur l'objet (1, 2) et comprend un récepteur radio (53) pour détecter et/ou exploiter le signal radio provenant de l'émetteur radio (51).

15. Système de vérification d'approche selon l'une quelconque des revendications 2 à 14, ***caractérisé en ce qu*'**à l'objet (1, 2) est associé un deuxième émetteur radio (52) et à la personne (11) est associé un deuxième récepteur radio (54), le deuxième récepteur radio (54) comprenant des moyens pour activer le détecteur de champ proche lors de la réception d'un signal radio depuis le deuxième émetteur radio (52).

16. Système de vérification d'approche selon l'une quelconque des revendications 2 à 15, ***caractérisé en ce que***
- le générateur de champ proche comprend un générateur (5) d'oscillations électriques pour produire le champ alternatif,
- le générateur (5) d'oscillations comprenant des moyens pour maintenir constante une fréquence d'oscillations.

17. Système de vérification d'approche selon la revendication 16, ***caractérisé en ce que*** le générateur (5) d'oscillations est conçu pour produire une oscillation sinusoïdale.

18. Système de vérification d'approche selon la revendication 16 ou 17, ***caractérisé***
- ***en ce que*** le générateur (5) d'oscillations est isolé galvaniquement d'un réseau de bord de l'objet (1, 2),
- ***en ce que*** le générateur (5) d'oscillations comprend des moyens pour régler une amplitude d'oscillations, et/ou
- ***en ce que*** le générateur (5) d'oscillations comprend des moyens pour régler une fréquence d'oscillations.

19. Système de vérification d'approche selon l'une quelconque des revendications précédentes, ***caractérisé en ce que*** l'électrode corporelle (31) est conformée en électrode annulaire, qui est prévue pour entourer un bras ou une jambe du corps.

20. Système de vérification d'approche selon l'une quelconque des revendications précédentes, ***caractérisé en ce que*** l'électrode corporelle (31) et/ou la contre-électrode (37) du deuxième dispositif (22) de champ proche est isolée électriquement vis-à-vis de l'environnement.

21. Procédé d'avertissement, ***caractérisé en ce qu*'**un système de vérification d'approche selon l'une quelconque des revendications précédentes est prévu et un signal d'avertissement est émis au moyen du dispositif d'avertissement (55) lorsqu'une personne (11) pénètre dans la zone de vérification.
